Europäisches Patentamt

European Patent Office

Office européen des brevets

(11) Publication number: **0 162 581**
**A1**

## (12) EUROPEAN PATENT APPLICATION

(21) Application number: **85302755.5**

(22) Date of filing: **19.04.85**

(51) Int. Cl.⁴: **G 06 F 12/14**
**G 06 F 1/00**

(30) Priority: **20.04.84 US 602471**

(43) Date of publication of application:
**27.11.85 Bulletin 85/48**

(84) Designated Contracting States:
**DE FR GB IT NL SE**

(71) Applicant: **COMPUTER SECURITY CORPORATION**
**1507 Maryland Avenue**
**Wilmington Delaware 19805(US)**

(72) Inventor: **Cairns, John P.**
**78 Lowry Drive**
**Wilmington De 19805(US)**

(74) Representative: **Horton, Andrew Robert Grant et al,**
**BOULT, WADE & TENNANT 27 Furnival Street**
**London, EC4A 1PQ(GB)**

(54) Apparatus and method for security of electric and electronic devices.

(57) Apparatus and method for verifying the authenticity of signal and controling and operating transporting and comparing and processing alphanumeric code information to a signal and controlling an operation with the information, having means (20) adapted to receive and store reference alphanumeric code information from a source (13) and means (16) for converting, for controlling an operation, an input to alphanumeric code information and transporting the input information to the means (20) containing the stored information and means (25) for calculating on the basis of the relationship between the stored and input information the accuracy of the input information and utilizing the calculations to determine a response to the input information. At least two responses are provided by the determination resulting from the calculations. One response signals a recording means. The other response verifies the accuracy of the input and is utilized in providing a signal for the actuation of an operation. The actuating signal is made up of a plurality of verifying responses. The authenticity of the actuating signal is affirmed by the combination of the verifying responses.

The operation is activated through an isolation device that makes the validating transparent to the operation.

./...

Fig.2.

## APPARATUS AND METHOD FOR SECURITY
## OF ELECTRIC AND ELECTRONIC DEVICES

## Background of the Invention

The present invention relates to the verification of a control of the operation of an electrically powered apparatus.

The invention further relates to means for protective control of the operation of apparatus.

Still further, this invention relates to a verification operation of the actuation of the control means by selected data and the detection of incorrect actuating data and the protection against unauthorized operation of apparatus.

Computer systems involve a large number of apparatuses at separated locations linked together and to a central pipeline. These electric and electronic devices are operated by signals transmitted through the system between locations which are physically remote from each other. The use of the system is intended to be restricted to those authorized to do so. A problem encountered in the operation of these computers and these systems is unauthorized use of the computers and particularly use with intent to steal or commit fraud. Attempts have been made to prevent this unauthorized use by employing scrambling equipment and to provide secret codes. This can be inadequate because the codes can be broken.

Security systems have been devised for preventing unauthorized access by remote control of electrical and electronic operations. The means previously provided to secure computer systems against unauthorized and improper operation have been evaded.

0162581

-2-

It is an object of this invention to provide apparatus and method for verifying the authenticity of an electrical or electronic signal for actuating the operation of a system.

Another object of the invention is to provide a device which can be set to respond to specific data and can actuate means for connecting apparatus to a power source.

It is a further object of this invention to provide a machine wherein information is stored in a plurality of stations and is utilized by the use of the stored information to verify the occurrence of an information introduced into the machine.

Among the objects of the invention are provisions of a method and apparatus for inserting alphanumerics into a comparator in a system and utilizing this coded alphanumerics to compare with alphanumerics generated for the purpose of actuation of a system.

### Summary of the Invention

The apparatus and method may be used for the actuation of control means by selected data transmitted in signals in which the detection of incorrect data protects against the improper operation of a system. The control means controls the operation of electronic or electric devices. The subject apparatus includes a means for signaling the actuation of the operation of the electronic or electric device when data inserted into the subject apparatus for effecting the actuation equals predetermined coded information stored in the apparatus. The control is thus effected.

-3-

The invention uses a plurality of digital comparators each of which receives reference alphanumeric coded information and an input both in binary digit, or bit, form. The alphanumeric reference information are stored data in each of the respective comparators. The combination of this information represents the correct code for signaling the actuation of the operation of the controlled device. The alphanumeric inputs are fed to the comparators from states which convert these characters into a string of 1's or zeroes called a binary coded decimal. When the binary coded decimals are equal the comparators issue pulses which place a logical one on one input and an "and" gate. When the comparators calculate their respective binary coded decimals are equal the inputs to the "and" gate are all logical ones, then all the inputs of the "and" gate are turned on and a positive output is transmitted to effect actuation of the operation of the electronic or electric device.

When any comparator calculates the input is not equal to the reference binary coded decimal, an output to an "or" gate generates a pulse from the "or" gate which signals the incorrect data and immediately utters the fact to suitable means for prohibiting actuation of the control means.

In one means for actuation of the operation the electronic or electric device a means for transmitting power to the device is activated by a light beam known as an Opto-Isolator. The activating device blocks the subject apparatus and method from detection from the operated electronic or electric device.

-4-

## The Drawings

Fig. 1 illustrates the physical arrangement of the units employed in the apparatus herein disclosed;

Fig. 2 is a block diagram illustrating the organization and other aspects of the invention;

Figs. 3A, 3B, 4A and 4 B show the circuit of the system employed in the apparatus of the invention;

Fig. 5 is a flow chart of parts of the procedure using flow chart symbols in English narrative descriptions;

Fig. 6 is a schematic of a power supply; and

Fig. 7 comprises a graph of the matched input pulses which trigger an incapacitating pulse.

## Definitions

The following are definitions of terms as used herein:

data bus - a system for moving data by a group of wires forming a common bus.

comparator - a unit that compares two binary numbers telling whether the numbers are equal, one-greater-than-the other or visa-versa.

multi-vibrator or flip-flop - two stages coupled so that the input of each is derived from the output of the other and having two stable states which appropriate inputs and can be changed from one state to the other by signal at the input.

monostable - a multi-vibrator circuit which changes its operation from one stable state to another when supplied with an external trigger pulse.

Schmitt trigger - a one-shot multi-vibrator in which each trigger pulse produces one complete output pulse.

binary coded decimal - a representation of an alpha-numeric character converted into a string of 1's or zeroes or in a binary code which for description purposes here are in four bit groups.

-5-

counter - a special kind of register made up of flip-flow circuits with one input and usually a parallel output from each flip-flop, which counts pulses arriving at the input and stores the total count in a certain code (usually binary numbers).

clock input - an input terminal on a unit typicially used for receiving a timing control-clock signal, but used in some applications for a control signal or even data.

programmable - a circuit which can be set with a fix program.

## Detailed Description

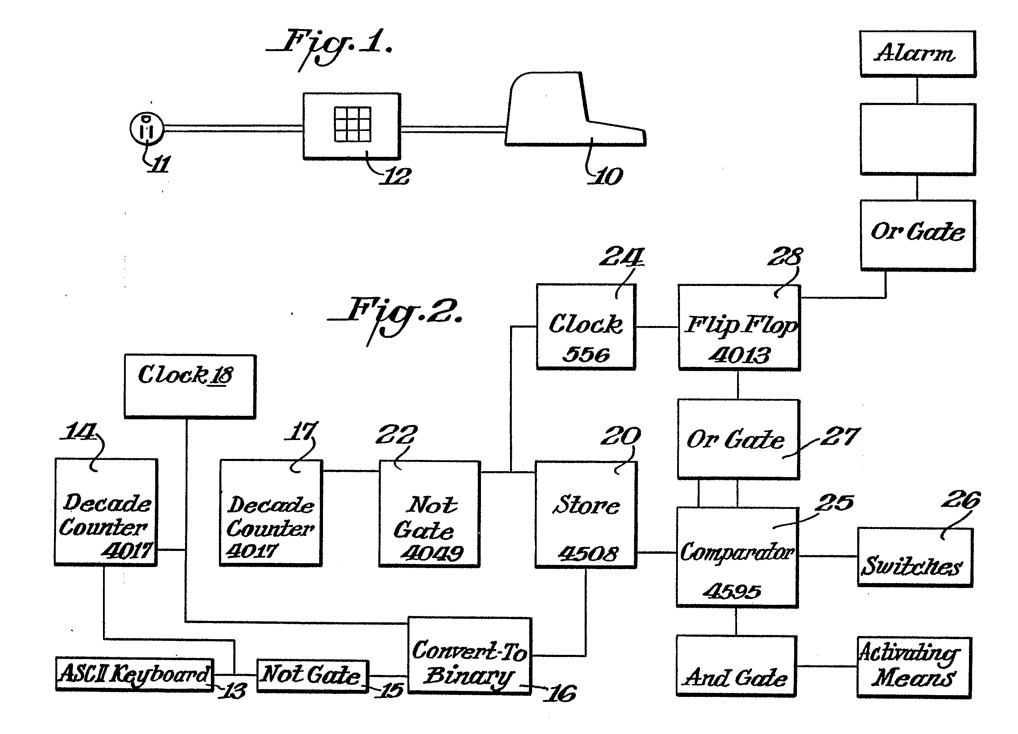

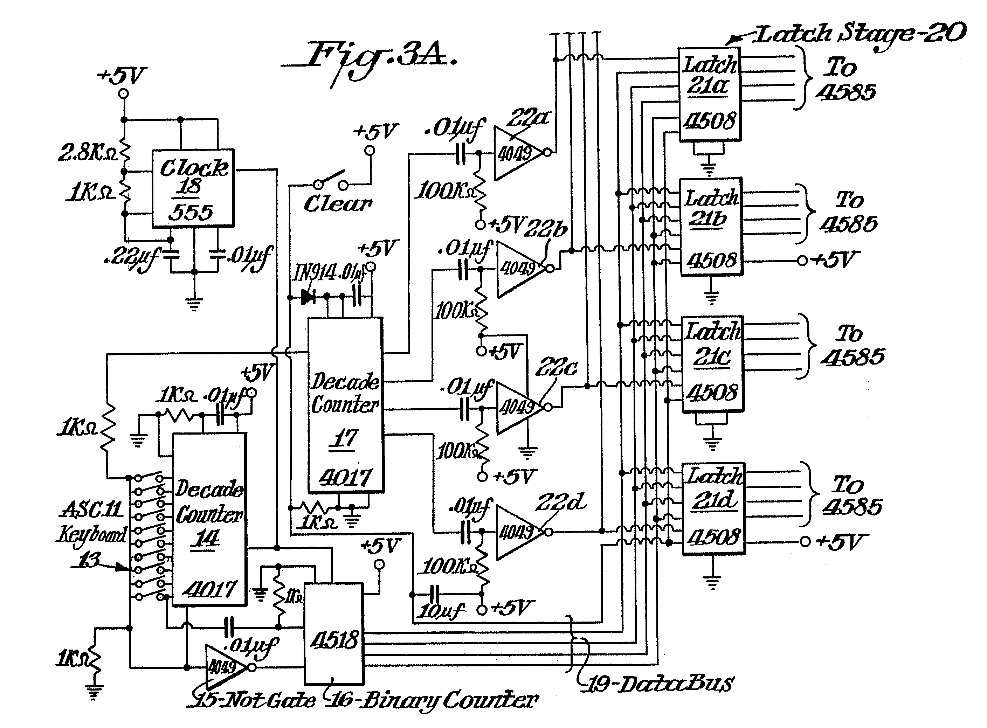

As illustrated in Fig. 1 a computer control board 10 is connected to a power supply 11 thorugh a protective apparatus 12 positioned between the control board 10 and the power supply 11. The control board 10 is representative of the electronic or electric device access and which is verified and validated by the present invention. The units 10, 11 and 12 are suitably connected. The operation of the assembled units is subject to the control of the protective apparatus 12. The protective apparatus 12 connects the control 10 to the power supply 11 when the appropriate signal is introduced into the protective apparatus 12 and voltage and current are applied to the control 10. The control 10 in turn operates appropriate computers.

One embodiment of the protective system is illustrated in the following description. The protective system is arranged to detect and correct signal introduced into the protective system and to actuate appropriate alarms and actions if incorrect information is introduced into the protective system. Also the protective system is provided with means for detecting and announcing by an alarm an unauthorized cutting of the power from the power supply.

-6-

It is a feature of the protective system that once having been activated it cannot be unplugged or have its power disconnected without activating an alarm.

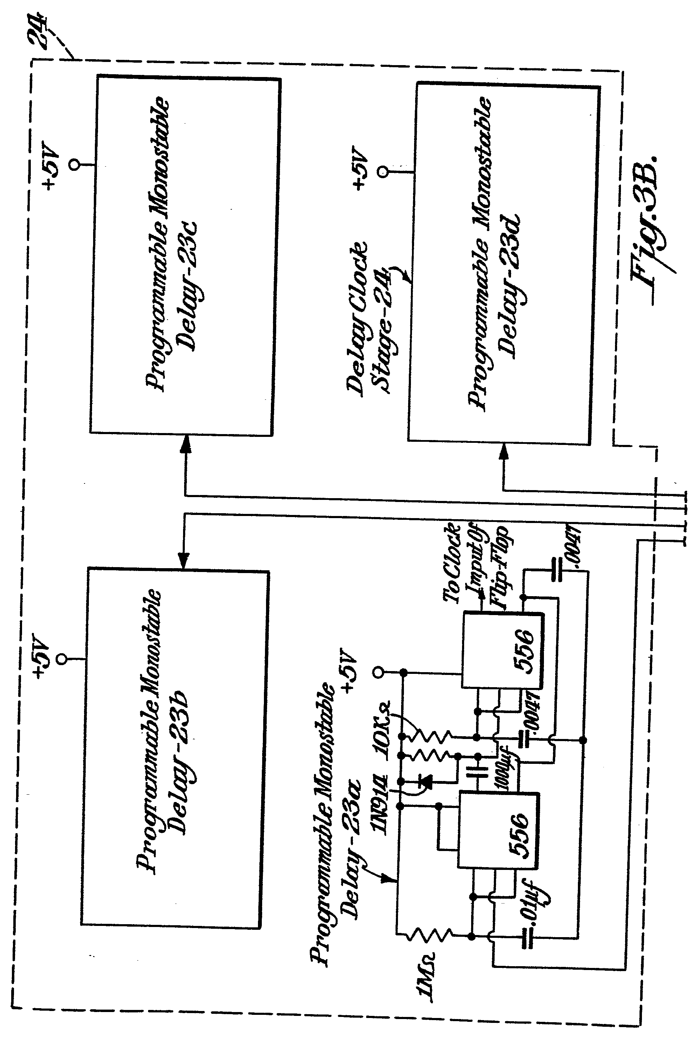

Fig. 2 is a general diagram of the circuitry. Fig. 2 shows the digital equipment which is employed in carrying out this invention. The purpose of this apparatus is to prevent unauthorized operation of the controls of a device such as a computer. In this apparatus system, an internal reference binary coded decimal of an alphanumeric character is compared with an input binary coded decimal. When the comparison has been made, and the result indicates that the binary coded decimal of the input is not equal to the reference binary coded decimal, an output is generated which either activates an alarm or in some other way signals the fact that the two integers are not equal when compared. Other appropriate action can be initiated. On the other hand, if the compared binary coded decimals are equal no alarm or other action result will be sounded because it will have been established that the compared inputs being equal the special code for access to the control board is being properly introduced into the system. Further the verifying response will be utilized in the production of a signal which results in the operation of the device.

In the following detailed description, integers represent the alphanumeric characters.

Referring to Fig. 2, ASCII keyboard 13, a decade counter 14, a not gate 15 and a binary counter 16 receive the designation of a selected integer, for example, the integer 3 and convert it into the four binary digits, or bits, which constitutes the numeral 3 in digital form namely 0011. These four bits are placed in the system. The actuation of the integer, for example 3, in the keyboard 13 also generates a "any key pressed" pulse which is applied to a second decade counter 17. It is noted that in one form of this invention, the pulse involves a time period of the order of 2 microseconds or 2000 nanoseconds.

When the keyboard 13 is operated to introduce an actuating signal by the actuation of specific keys of the keyboard according to the designated sequence, the keys are actuated separately and successively in accordance with the sequence. Each selected integer when entered on the keyboard actuates an output from the decade counter 14 to the not gate 15 which acting as an inverter is turned on by the positive voltage pulse to transmit a signal to the binary counter 16.

The schedule of the operations for the conversion of the integer to the binary coded decimal is governed by a clock 18 whichderives both the decade counter 14 and the binary counter 16. The clock frequency is the master frequency which times the pulses of the output from the counter 16.

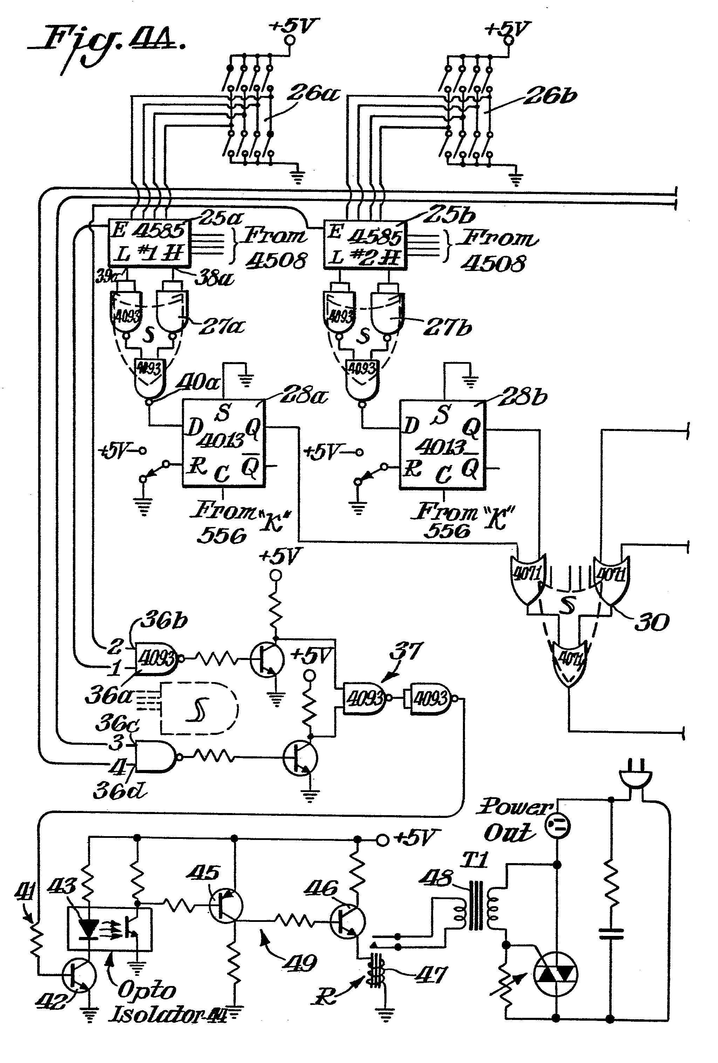

The output from gate and fed to the counter 16 is converted from the selected integer to a binary coded decimal consisting of 4 bits and hereinafter referred to as a nybble. The data nybble is placed on the data bus 19 from counter 16 and is transmitted to a hold and latch stage 20 where it is stored in a selected latch of stage 20 which contains latches 21a, 21b, 21c, and 21d illustrated in Fig. 3A.

-8-

In the following description of Fig. 2 the processing of one of the integers and its binary coded decimal is traced through the apparatus. The coded decade counter 17 is incremented successively with the entry of each integer at the keyboard 13 by any key pressed pulse. A step-by-step incrementing of the output of counter 17 is transmitted to a not gate inverter represented by 22 in Fig. 2 through which the incremented output from the counter 17 is fed to the stored stage 20 through a not gate stage 21. Thus, with each successive entry of the sequenced integers at the keyboard 13 the counter 17 transmits a pulse to the stage 20 while the counter 16 converts the entered integer to a binary coded decimal which is transmitted by the data bus 19 to the latch stage 20 where it is stored.

Thus each time an integer is entered from the keyboard 13, the binary decimal equivalent is placed on the data bus 19 and the binary decimal is stored in the latch stage 20. The stage 20 includes data latches 21a-21d as explained below in relation to Fig. 3A. An appropriate latch 21a-d is selected by the half monostables output from the gates 22a-d which are in stage 22 also described below.

For each sequenced integer there is an output pulse from inverter not gate 22 which transmits a leading edge to a delayed clock stage 21 connected to the inverter not gate stage 22. These pulses are fed to a delayed clock stage 24 with each successive entry at the keyboard.

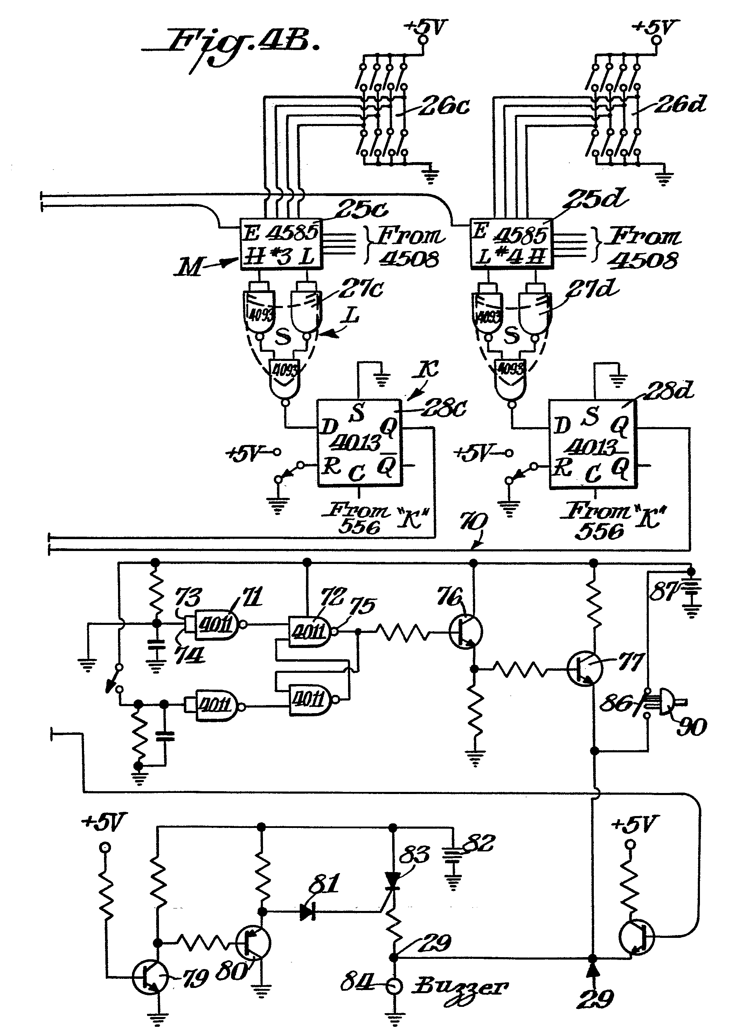

The signal from the hold and latch stage 20 is transmitted on the data bus 19 to a comparator stage 25 made up of four comparators 25a, 25b, 25c and 25d in the described embodiment illustrated in Figs. 4A and 4B.

-9-

The valid integer is introduced into the comparator stage 25 in the form of binary coded decimals from switches represented in Figs. 2 at 26. The data nybble made up four bits is the internal reference numeral to be matched by the integer input represented by the binary coded decimal from the hold and latch stage 20.

In this comparator stage 25 the input integer, as represented by the binary coded decimal from the latch and hold stage 20 and the internal reference integer as represented by the binary coded decimal entered from the switch 26 are compared. The comparison of the input integer and the internal reference numeral in the comparator stage 25 determines whether input integer is equal to the reference numeral.

If the integer is different, the input integer is either larger or smaller than the reference numeral integer. If the input integer is larger than the reference numeral there is an output pulse from the comparator proceeds to a Schmitt trigger 27 through the connection A. If the input integer is smaller than the reference integer, the output pulse from the comparator stage 25 proceeds to an OR gate represented at 27. If the input integer equals the reference integer an output pulse from the comparator stage 25 to an AND gate 37. The utilization of this pulse to the AND gate 37 to provide a signal through the isolation device is described below.

If the output from the comparator stage 25 indicates the integer is not equal, the pulse to the OR gate is shaped to a well-defined positive output pulse to a matching circuit represented at 28. At circuit 28 there is matching to a delayed clock pulse from the delayed clock stage 24. This matching which activates invalidating action is described below.

-10-

Now referring to Figs. 2, 3A, 3B, 4A and 4B details of the protective system may be seen. Fig. 2 is a general block diagram of the circuitry of Figs. 3A, 3B, 4A and 4B. The clock 18 is an IC chip configured for a stable operation oscillating at approximately 2Khz to drive both the decade counter 14 and the binary counter 16. The clock 18 has a suitably powered power supply network from a 5 volt power source. The encoder assembly of the keyboard 13, decade counter 14, NOT gate 15 and binary counter 16 under the timing pulses of clock 18 enter the integers selected by key actuation and convert the selected integer to a binary coded decimal by a positive pulse applied to the input 34 of gate 15 from the output 31 of counter 14. The counter 14 and 16 are powered by a 5 volt source. This positive pulse on gate 15 generates a pulse on the input 32 of the binary counter 16. This input pulse is converted to a binary code in counter 16 of four bits. The four wires A, B, C and D of the data bus 19 each transmit one of the bits so that the data information in the four bits is transmitted in the data bus 19 by the wires A, B, C and D. The combined 4 bits on the data bus is the nybble. The nybble, which represent an integer is fed from the counter 16 for storage to the hold and follow latch stage 20 made up of four data latches 21a-d. The latches 21a-d receive from the data bus 19 and transmit the bits of the nybble when a pulse is received from decade counter 17 as transmitted by gates 22a-d of the NOT gate stage 22.

-11-

The "any key pressed" pulse is also generated by the keypad encoder. This pulse is used to increment the decade counter 17. The four outputs from counter 17 are connected to four inputs of the inverter gates 22a-d each of which are configured as a half monostable or edge detector. The output from these half monostables go to two sections of the unit. The first section is the programmable monostable stage 20. The pulse is directed to store pin 35 of latches 21a-d. The trailing edge section of the pulse enables the data nybble to be placed on the data bus by the binary counter 16. This data nybble is to be stored in the selected latch 21a-d. The clock 18, the counter 14, 16 and 17 and the gates 22a-d are powered by a 5 volt supply.

The other destination of the output from the half monostables 22a-d is programmable monostables 23a-d one for each bit, in the stage 24 which functions as a delayed clock pulse for the matching stage 28 made up of four flip-flop circuits 28a-d. The flip-flop 28a-d matches the output of the monostables 23a-d of stage 24 with the output of comparator 25. A further description of this matching is set forth below.

The respective valid internal reference numerals are set in the comparators 25a-d by entry from the respective sets of feed switches 26a-d. The feed switches 26a-d are similar. In the present description only that for switches 26a will be described, but the description will apply in all respect to the structure of and processing from feed switches 26b, c and d.

-12-

An internal reference numeral of the valid sequence is entered into comparator 25a from feed switch 26a by punching the binary coded decimal for the reference numeral into the single pulse, single throw dual in line switch terminals making up the feed switch 26a. These switch terminals are hard wired to the comparator 25a. The reference numeral is stored in the comparator 25a for comparison with the integer entered from the keyboard 13 and stored in the latch 21a. Comparator 25a is a four bit magnitude comparison circuit receiving the binary coded decimal from the latch 21a on the data bus 19.

The comparison of the reference numeral and the keyboard entered integer in the comparator 25a results in the logic which asks whether the compared numeral and integer are equal or the entered integer is greater than the reference numeral, or the entered integer is less than the reference numeral. Thus three results are possible. If the numeral and integer are equal the comparator 25a transmits a logical one on input 36a of an AND gate 37. If the entered integer is greater than the reference numeral the comparator 25 transmits a positive pulse to the high input 38a of the OR gate 27a. If the entered integer is less than the reference numeral the comparator 25a enters a positive pulse on the low input 39a of the OR gate 27a. Accordingly, a positive pulse on either the high input 38a or the low input 39a results in an output pulse from the output 40a of the OR gate 27a embodied herein on Schmitt trigger. The output signal from output 40a is fed to the flip-flop 28a. The delayed clock pulse from monostable 23a is matched with the output pulse from OR gate 27a and if the compared binary coded decimals are not equal a pulse is fed to the pulse conditioning circuit 30.

-13-

With each integer entered at the keyboard 13 and fed through the inverter NOT gate 22a a delayed clock pulse is fed from delay 23a to the flip-flop 28a. The signal of the delayed clock pulse at flip-flop 28a produces an output from flip-flop 28a to the OR gate 30 when the flip-flop has been conditioned with a one pulse from OR gate 27.

The signal from flip-flop 28a to the OR gate 30 is either a logical 1 pulse or a logical 0. If the flip-flop 28a has received a positive pulse from output 40a of OR gate 27a a logical one pulse is fed to gate 30 and an output from gate 30 of a logical 1 is transmitted as a signal to the alarm 29. Accordingly, the entry of an incorrect integer at the keyboard 13 is identified.

The clock pulse from stage 24 in general and one of the delay 23a-d in particular must be delayed in order to permit the processing at the comparator stage 25 and in the OR gates 27a-d to occur. Referring in particular to flip-flop circuit 28a the function of the apparatus centers on the matching of the delayed clock pulse with the presence of a one at pin D of the circuit 28a. When the circuit 28a is put in a reset state the 5 volt potential is applied at pin R this sets output pin Q at 0 and $\bar{Q}$ at 1 and pin D at 1. If the comparison operation finds the input integer to be valid, the OR gate 27a produces a 0 to the circuit 28a and the 1 at pin D disappears. The delayed clock pulse subsequently applied to circuit 28a lacks a matching pulse and no output from pin Q results.

The flip-flop 28a transmits a logical 0 to the gate 30. Consequently, no signal from gate 30 is generated, signifying an absence of an incorrect integer entry at keyboard 13.

0162581

-14-

To the contrary, a not equal results from the comparison resulting in a positive pulse from OR gate 27a leaves the one on pin D of circuit 28a. A way to get this one across to the out put Q is by application of the clock pulse and this is what occurs and alarm is sounded or other appropriate invalidating action is instituted.

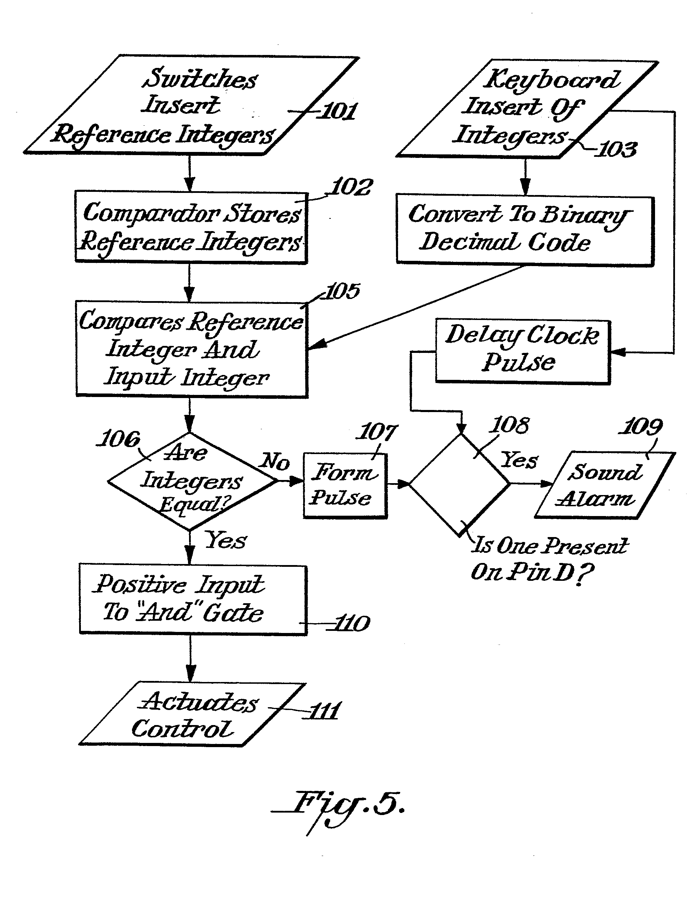

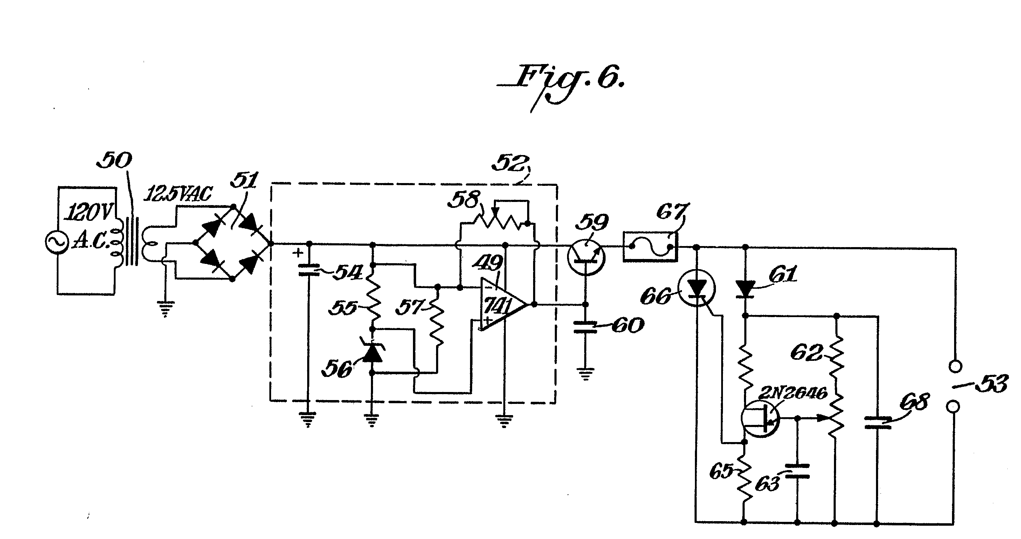

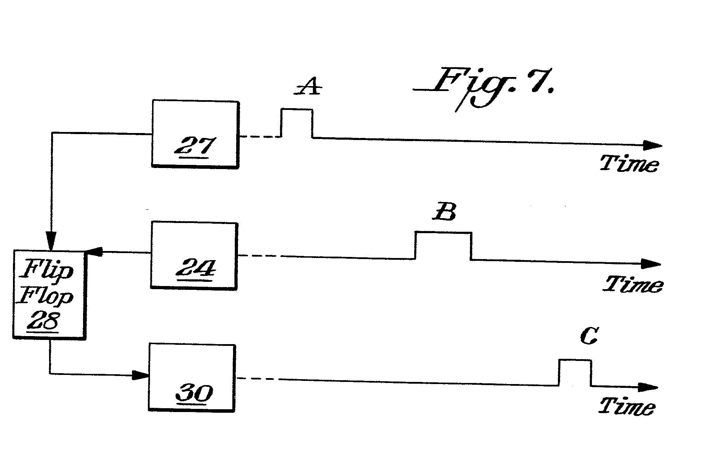

Fig. 7 shows a graph of the relation to the signals of the circuits 28a-d and the output therefrom. Referring again to the processing which compares binary coded decimals at comparator 25a, in the graph it can be seen that the positive pulse processing from gate 27a to cirucit 28a at a point in time. Subsequent in time the delayed clock pulse proceeds from delay 23a of the delayed clock stage. This results in the output pulse from pin Q to gate 30.

If alarm 29 is not activated after the first integer then the next integer is entered and so forth until the entire sequence has been entered successfully. After the proper 4 digit sequence has been entered, the four inputs to the functional "and" gate 37 will be logical ones. Under this condition a positive level output from the circuit 41 and is directed to the base of transistor 42 of circuit 41 and is directed to the base of transistor 42 of circuit 41. Transistor 42 activates the light emitting diode 43 in the opto isolator 44. This opto isolator 44 turns on the PNP transistor 45 in circuit 49. This transistor 45 causes base current to flow in the transistor 46 which turns on relay 47. Relay 47 is connected to the secondary of a transformer 48. The shorting of the secondary of 48 causes voltage and current to be applied to the power consuming device attached.

-15-

Fig. 5 shows the flow chart from the system illustrated in Figs. 2 thorugh 4B. In Fig. 5 the input and output steps are shown within the irregular parallelograms, the function steps are within the rectangles, whereas logic step is shown within the diamond-shape parallelogram and the arrows indicate the flow direction.

An insert 101 of reference integers stores the coded numbers in the comparator. This function step, indicated by reference numeral 102, makes the numbers available for comparison. An insert 102 of integers selected at the keyboard inserts the integers shown at 103 into a step of conversion to binary decimal code indicated by reference numeral 104. The reference integers and the key inserted integers are compared in the function step 105. Having available the reference integers and the key inserted integers the comparator asks a logical question 106, are the integers equal or non-equal. If the integers are not equal, i.e. the keyboard inserted integer is either greater than or less than the reference integer. Then, the signal to the OR gate forms a pulse, the function is indicated by 107. The keyboard inserts a pulse which is delayed at 108 and then matched to the pulse formed at 107. The question is asked is a pulse formed. If there is a pulse an alarm is sounded at 109.

If the integers are equal a positive signal is generated at the input of the AND gate at 110 to actuate the computer control indicated at 111.

A power supply shown in Fig. 6, is composed essentially of a step-down transformer 50, a full-wave bridge rectifier 51, a network 42 and an output 53.

-16-

The step-down transformer 50 supplies 12.5 volts of alternating current to the rectifier 51. An effective voltage of approximately 17.5 volts is applied to the positive plate of capacitor 54 in the network 52. The capacitor 54 functions as a high pass filter removing the low-frequency component of the alternating voltage. This creates a direct current and voltage which is in parallel with a series limiting resistor 55 and zener diode 56. The diode 56 and resistor 55 are connected to the input of operational amplifier 49 and feedback provided by resistor 57 and 58. Resistor 58 is variable. The voltage is supplied from network 52 through transistor 59. The voltage can be accurately determined by adjusting resistor 58. The adjustment of resistor 58 by clamping a capacitor 60 on the base of transistor 59 at a level such that the voltage between the emitter of transistor 59 and ground is set to the required level. The output from transistor 59 is transferred to the output 53 through a crowbar circuit.

The crowbar circuit operates when the voltage and current exceeds the prescribed level. Fed through diode 61 and a resistor network 62, a capacitor 63 begins to charge. If capacitor 63 is charged to a required level thus unijunction 64 discharges capacitor 63 through resistor 65 which triggers gate of the SCR 66. The positive gate voltage of SCR 66 causes fuse 67 to blow.

Capacitor 68 functions to an additional delay for the trip point.

The apparatus contains circuit means for preventing failure of or vitiating the operation of the apparatus.

-17-

Referring to Fig. 4B the power cable from the protective apparatus to the electronic or electric device is protected from being cut by a circuit 70. This circuit 70 uses NAND gates. Two of the NAND gates 71 are configured as inverters. Two of the NAND gates 72 function as an R-S latch. A wire running through the power cord is illustrated in Fig. 4B as connected to pins 73 and 74 of the NAND gate 71 and terminating at ground. If the power cord is cut and this wire is cut or otherwise open, then a pin 75 of the AND gate 72 goes positive and provides base current to the transistor 76 of the circuit 70. This in turn gives base current to transistor 77 which in turn conducts to activate the alarm 29.

The apparatus once activated cannot be unplugged or have the power disconnected without the alarm 29 being activated. This is provided by the circuit of alarm 29 illustrated in Fig. 4B. Five volts is applied to the base of the transistor 79 in the alarm circuit. This places transistor 80 into conduction and in turn connects the anode of diode 80 to ground. If the apparatus is unplugged or power is otherwise removed from transistor 79, the voltage of the battery 82 is placed on the anode of diode 81 and this in turn causes the SCR 83 to conduct. The on state of the diode 81 in turn provides the current which activates a buzzer alarm 84.

Another protection against unauthorized activity is provided by the connector means of the control board 10 and the protective apparatus 12. In Fig. 4A, a receptacle 85 is provided for the connection of the power consuming device, represented in Fig. 1 by control board 10, to the verifying apparatus, represented in Fig. 1 by the protective apparatus.

18-

This receptacle 85 contains an electro-mechanical switch 86 shown in Fig. 4B in a line connection between the positive side of battery 87 and the buzzer alarm 84. When switch 86 closes the buzzer 84 is sounded.

In operation, the receptacle 85 receives a plug 90, shown in Fig. 4B which holds switch 86 open. If and when the device as represented by control board 10 is separated from the verifying apparatus and plug 90 is removed from receptacle 85, switch 86 closes and the alarm 84 announces the disconnection.

### Advantages

In addition to the advantages of the present invention described above, this system features redundancy in protection against misappropriation. For example, the verified command which leads to the actuating signal works through a magnetic field which is activated by a light beam. One of the results of this means is that the protective apparatus 12 is transparent to the control board 10.

When an authorized user enters the correct code, this is verified and the actuating signal is produced. If an error is made or an incorrect code entered, the audible alarm is activated. For an alarm to be terminated, an authorized individual must have access to a locked unit to reset the contained apparatus.

It will be understood that the apparatus described above can be modified with the spirit of the invention. For example, the design can be expanded to involve 10 digits in the coded information. This increases the odds against accidental discovery of the correct code to 1 in 1,000,000,000.

-19-

Also it will be understood that the comparison step can be effected by the programming of the EPROM within the purpose and object of this invention.

It is a feature of this invention that the delay introduced in generating the signal indicating an incorrect input provides time to record a phone number or for initiating a trace activity.

## Claims

1. A method of verifying information coded in alphanumeric characters in a digital system comprising

first providing reference alphanumeric characters in binary coded decimals to comparator means in said digital system,

said comparator means receiving said reference binary coded decimals

second, introducing input alphanumeric characters into the system and converting the input characters to binar coded decimals,

introducing the input binary coded decimals into the comparator means,

comparing the input binary coded decimals with the reference binary coded decimals in the comparator,

matching the binary coded decimals of the input with the binary numbers of the reference binary coded decimals and determining the relationship,

so that equal binary coded decimals provide a pulse to means for providing a signal in response to verification of the input alphanumeric characters

and unequal decimals provide a pulse to means for providing a signal indicating an absence of verification of the input alphanumeric characters.

2. The method as claimed in claim 1 wherein the input alphanumeric characters are introduced in a coded sequence and equal binary coded decimals provide a pulse to means for providing a signal in response to verification of the sequence of input alphanumeric characters.

3. The method as claimed in claim 1, wherein the alphanumeric characters are comprised of integers.

4. The method as claimed in claim 1, wherein the alphanumeric characters are comprised of letters.

5. The method as claimed in claim 2, wherein said sequence of alphanumeric characters is in a coded sequence and the reference binary coded decimals and the input binary coded decimals are introduced into the comparator means in the coded sequence and the verification is of the coded sequence of alphanumeric characters.

6. The method as claimed in claim 2, including the step wherein unequal binary coded decimals provide a pulse to means for providing a signal indicating an absence of verification of the input alphanumeric characters.

7. The method as claimed in claim 2, including the step of providing the pulse from equal binary coded decimals to activate a means which transmits a signal only from the comparing step to a step of generating a current flow to operate a switch.

8. The method as claimed in claim 7, wherein the pulse from equal binary coded decimals activates a light emitting diode to transmit said signal from the comparing step.

9. The method as claimed in claim 6, including the step wherein the pulse to the means for indicating an absence of verification is time delayed by the input of alphanumeric characters which delay in time the pulse to the means for providing a signal indicating an absence of verification.

10. An apparatus for initiating the supply of electrical power to an electrical apparatus comprising:

a) a keyboard comprised of means for introducing alphanumeric characters into the apparatus,

b) a unit for converting said alphanumeric characters to binary coded decimals,

c) at least one digital comparator,

d) means for introducing reference alphanumeric characters into the comparator in the form of binary coded decimals,

e) means for introducing said input binary coded decimals into said comparator and comparing the input decimals and the reference decimals,

f) and means for providing a signal for initiating said supply of electrical power in a connection with the comparator.

11. An apparatus for verifying the accuracy of alphanumeric signals for actuating the control of a device comprising a multiplicity of first pulse-responsive means adapted to store and compare binary coded decimals, means for converting incoming alphanumeric signals to forming binary coded decimals on an interconnecting data bus connected to establish interconnection between said converting means and an electric pulse control switch selected means, said apparatus having second pulse-responsive means actuatable by said alphanumeric signals connected to establish interconnection between the data bus and the first pulse-responsive means and to compare in said first pulse-responsive means stored binary coded decimals and incoming binary coded decimals and check for equal binary coded decimals.

12. Apparatus for verifying coded information and actuating a positive function of said apparatus comprising, a keyboard encoder adapted to receive alphanumeric information code members, means for converting the alphanumeric code information to first binary coded decimal bits, an interconnecting data bus establishing an interconnection with a data latch for transmitting the first binary coded decimals, means adapted to store second binary coded decimals and to compare said stored decimals with the first binary coded decimals inserted at the keyboard, means actuated by pulses generated from the keyboard for transmitting the first binary coded decimals to the compare means,

means comparing the first and second binary coded decimals and producing a verifying pulse,

gate means adapted to receive a plurality of verified pulses from the comparing means and produce a signal for actuating a power switch,

said comparing means adapted to produce a pulse when the decimals are not equal,

means matching said not-equal pulse with a delayed clock pulse actuated by a pulse generated at the keyboard,

and producing an alarm signal upon matching said not-equal pulse and delayed clock pulse.

13. In an apparatus as claimed in claim11, a sensing device receiving the input alphanumeric signals comprising an ASCII keyboard and circuitry adapted to convert selected letter or numbers to the binary coded decimals consisting of a plurality of bits.

14. In an apparatus as claimed in claim 12, incrementing means receiving pulses from said keyboard for selectively transporting pulses to the latches in successive inputs to store the binary coded decimals of the converted input alphanumerics in successive latches.

15. In an apparatus as claimed in claim 11, individual interconnections between the data latches and the compare means for directing the binary coded information successively from storage in a latch to a compare means responsive to the selective pulses from the incrementing means to the latches.

16.   In an apparatus as claimed in claim 12, delay means receiving pulses from the keyboard encoder, individual interconnections between the delay means and the matching means for successively coupling a positive output from the comparing means when the decimals are not equal and a pulse from the delay means to generate an output pulse.

17.   An apparatus as claimed in claim 10, wherein the means for providing a signal for initiating the supply of electrical power to electrical apparatus comprises individual interconnections including a conductor, means connected by said conductor which biases a transistor in a non-conductive mode whereby disconnection of said conductor removes the bias and the transistor conducts to provide a signal.

18.   Apparatus as claimed in claim 10, including means actuated by pulses generated from the keyboard adapted to transmit the first binary coded decimals to the comparator,

said comparator of the first and second binary coded decimals being adapted to produce a verifying pulse,

gate means adapted to receive a plurality of verified pulses from the comparator and wherein said signal for initiating said supply of electrical power consists of a signal for actuating a power switch.

said comparator adapted to produce a pulse when the decimals are not equal,

means matching said not-equal pulse with a delayed clock pulse actuated by a pulse generated at the keyboard,

and producing an alarm signal upon matching said not-equal pulse and delayed clock pulse

19. In apparatus as claimed in claim 10, means for introducing aliphanumeric characters for storage as reference binary coded decimals in the comparator comprising means adapted to provide an internal code in said apparatus.

20. In apparatus as claimed in claim 18, said means adapted to provide an internal code comprising single pole signal throw dual in line switches and wired to the comparator.

21. In apparatus as claimed in claim 18, said means adapted to provide an internal code comprising a random access memory with interconnection links to a central processing unit.

22. In apparatus as claimed in claim 10, incrementing means receiving pulses from said keyboard for selectively transporting pulses to a selected delay in successive inputs to delay transmission of pulses from the delay.

# Fig. 1.

11

12

10

Alarm

Or Gate

# Fig. 2.

Clock 18

Clock
556

24

Flip Flop
4013

28

14

Decade
Counter
4017

17

Decade
Counter
4017

22

Not
Gate
4049

20

Store
4508

Or Gate

27

Comparator
4595

25

Switches

26

ASCII Keyboard

13

Not Gate

15

Convert-To
Binary

16

And Gate

Activating
Means

Fig.3A.

Latch Stage-20

19-Data Bus

Programmable Monostable Delay-23b

Programmable Monostable Delay-23c

+5V

+5V

24

Programmable Monostable Delay-23a

+5V

1N914   10KΩ

1MΩ

556   1000µf   .0047   556

.01µf

To Clock Imput Of Flip-Flop

.0047

Delay Clock Stage-24

+5V

Programmable Monostable Delay-23d

Fig.3B.

0162581

*Fig. 4A.*

0162581

## Fig.4B.

*Fig.5.*

Fig. 6.

7/8

0162581

0162581

Fig. 7.

A

27

Time

B

24

Time

Flip
Flop
28

C

30

Time

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 267 578  (TEXAS INSTRUMENTS) <br> * Column 2, line 61 - column 3, line 20; column 4, line 65 - column 5, line 8; column 7, line 14 - column 8, line 53 and column 9, line 33 - column 11, line 8 * | 1-3,6, 7 | G 06 F   1/00 <br> G 06 F  12/14 |
| A |  | 5,10- 12 |  |
| E | EP-A-0 145 405  (GARRATT) <br><br> * Page 2, line 20 - page 5, line 3 * | 1,2,10 -12,19 |  |
| X | US-A-4 103 289  (KOLBER) <br><br> * Column 5, line 53 - column 7, line 52 * | 1-3,6, 7 | TECHNICAL FIELDS SEARCHED (Int. Cl.4) |
| A |  | 5,10- 12,14- 19 | G 06 F   1/00 <br> G 06 F  12/14 |
| A | US-A-4 262 337  (GENERAL MOTORS) |  |  |

The present search report has been drawn up for all claims

| Place of search <br> THE HAGUE | Date of completion of the search <br> 06-08-1985 | Examiner <br> LEPEE W. |
|---|---|---|

EPO Form 1503. 03.82